# EUROPÄISCHE PATENTSCHRIFT

(11) **EP 1 215 411 B1**
(45) Veröffentlichungstag und Bekanntmachung des Hinweises auf die Patenterteilung: **31.07.2019**
(21) Anmeldenummer: 01129531.8
(22) Anmeldetag: 11.12.2001
(51) Int. Cl.: C23C 8/34, C23C 8/80, C23C 28/04, F16D 125/06, F16J 1/02

(54) **Hydraulischer Bremskolben sowie Verfahren zu seiner Oberflächenbehandlung**
Hydraulic brake piston and process for its surface treatment
Piston de frein hydraulique et procédé pour son traitement de surface

(30) Priorität: 18.12.2000 DE 10062431
(43) Veröffentlichungstag der Anmeldung: 19.06.2002
(73) Patentinhaber: Continental Teves AG & Co. OHG, 60488 Frankfurt am Main (DE); FIRMA SANDER KG GmbH & Co., D-77871 Renchen-Ulm (DE); Bodycote Wärmebehandlung GmbH, 58511 Lüdenscheid (DE)
(72) Erfinder: Birkenbach, Alfred, 65795 Hattersheim (DE); Weiler, Rolf, 65817 Eppstein (DE); Wägner, Martina, 90431 Nürnberg (DE); Elwart, Jan, 50374 Erfstadt (DE); Zeibig, Uwe, 77855 Achern (DE)

(56) Entgegenhaltungen:
- EP-A- 0 077 627
- EP-A- 0 122 762
- EP-A- 0 229 325
- EP-A- 0 497 663
- EP-A- 0 733 720
- EP-A- 1 262 694
- PATENT ABSTRACTS OF JAPAN Bd. 007, Nr. 269 (M-259), 30. November 1983 (1983-11-30) & JP 58 146762 A (KAYABA KOGYO KK), 1. September 1983 (1983-09-01)
- PATENT ABSTRACTS OF JAPAN Bd. 2000, Nr. 01, 31. Januar 2000 (2000-01-31) -& JP 11 269631 A (TOKICO LTD), 5. Oktober 1999 (1999-10-05)
- PATENT ABSTRACTS OF JAPAN Bd. 016, Nr. 110 (C-0920), 18. März 1992 (1992-03-18) & JP 03 285058 A (ATSUGI UNISIA CORP), 16. Dezember 1991 (1991-12-16)
- PATENT ABSTRACTS OF JAPAN Bd. 016, Nr. 110 (C-0920), 18. März 1992 (1992-03-18) & JP 03 285059 A (ATSUGI UNISIA CORP), 16. Dezember 1991 (1991-12-16)

## Beschreibung

Die Erfindung betrifft einen hydraulischen Bremskolben sowie ein Verfahren zu seiner Oberflächenbehandlung, um an der Kolbenoberfläche gewünschte Eigenschaften hinsichtlich Verschleißfestigkeit sowie Korrosionsbeständigkeit einzustellen.

Beispielsweise aus dem Bereich der Kraftfahrzeugbremsen sind hydraulische Kolben zur Verwendung innerhalb hydraulischer Bremsanlagen bekannt, die eine besonders gestaltete Oberfläche aufweisen, um die Anforderungen vor allem hinsichtlich Verschleißfestigkeit sowie Korrosionsbeständigkeit zu erfüllen. Zur Gewährleitung dieser Anforderungen sind heute übliche hydraulische Bremskolben zum Einsatz innerhalb von Reibungsbremsen häufig an ihrer Oberfläche verchromt. Dabei wird die Gefahr der Ablösung der Chrombeschichtung ebenso wie deren mangelnde Umweltverträglichkeit als Nachteil empfunden. Auch für andere Beschichtungsmaterialien besteht das Problem der unzureichenden Haftung am eigentlichen Kolbenwerkstoff, so daß leicht eine Beschädigung der Kolbenoberfläche auftreten kann. Zudem führt eine aufgebrachte Beschichtung zu einer unerwünschten Veränderungen der Außenabmessungen des Kolbens.

In der DE 31 14 124 A1 wird darüber hinaus ein Kolben aus Aluminium sowie Silizium für Verbrennungsmotoren beschrieben, der mit einem hartoxidierten Boden versehen ist. Durch die Verwendung kostenintensiver Materialien ist auch die Oberflächenbehandlung des Bodens aufwendig, was den fertigen Kolben relativ teuer macht. Zudem ist es als nachteilig anzusehen, daß der Kolben nur in Teilbereichen eine verbesserte Oberflächengüte aufweist. Für eine Verwendung als hydraulischer Kolben ist somit die Korrosionsbeständigkeit nicht sichergestellt.

EP 0 077 627 A2 und EP 0 122 762 A2 beschreiben jeweils Verfahren zur Herstellung korrosionsgeschützter Komponenten wie insbesondere einen Stoßdämpferkolben aus Stahlwerkstoff. Dabei ist eine Oxidschichtdicke unterhalb von 1 µm angestrebt. Eine Verbindungsschicht ist nicht definiert. Für den entsprechenden Herstellungsprozess ist weiterhin angegeben, dass eine mechanische Oberflächenbearbeitung vor einer Oxidierung durzuführen ist. Ausgehend davon besteht die Aufgabe der Erfindung darin, einen hydraulischen Bremskolben sowie ein Verfahren zu seiner Herstellung anzugeben, wobei der Kolben ohne bzw. eine geringfügige Maßänderung eine beständige Oberfläche hoher Verschleißfestigkeit sowie guter Korrosionsbeständigkeit aufweisen soll.

Gelöst wird diese Aufgabe durch einen kaltverfestigten hydraulischen Bremskolben nach den Merkmalen des Patentanspruchs 1. Danach ist der hydraulische Bremskolben für eine Kraftfahrzeugbremse, mit einer thermochemisch behandelten Oberfläche versehen, die aus mehreren übereinanderliegenden Schichten gebildet wird. Unmittelbar an der Kolbenoberfläche ist eine durchgehende Oxidschicht ausgebildet, die eine Dicke von mehr als 1µm aufweist. Bei einem Kolben aus Eisenwerkstoff ist diese Schicht aus Eisenoxid aufgebaut und gewährleistet die Korrosionsbeständigkeit des Kolbens. Dazu ist es wichtig, daß die Oxidschicht möglichst die gesamte Oberfläche des Kolbens bedeckt und keine Unterbrechungen aufweist. Unter der Oxidschicht ist eine vornehmlich aus Nitriden bestehende Verbindungsschicht mit einer Mindestdicke von 8 µm angeordnet, die eine sehr hohe Härte aufweist und dadurch die gewünschte Verschleißfestigkeit an der Kolbenoberfläche erzeugt. Dabei bilden sich die Nitride durch ein thermochemisches Verfahren zur Oberflächenbehandlung, bei dem Stickstoff in die Kolbenoberfläche diffundiert.

Durch die thermochemische Behandlung bildet sich unter der Verbindungsschicht eine Diffusionsschicht geringerer Härte, die Stickstoff in gelöster Form bzw. ausgeschiedene Nitride aufweist. Die Diffusionsschicht dient dabei der Erhöhung der Dauerfestigkeit des Kolbens und hat vorzugsweise eine Dicke von einigen Zehntel Millimeter. Die Verbindungsschicht sollte eine Mindestdicke von 8µm aufweisen, um die gewünschte Oberflächengüte zu erzielen. In der Praxis hat sich eine Dicke der Verbindungsschicht von etwa 12µm als günstig erwiesen. Von der Kolbenoberfläche gesehen unterhalb der Diffusionsschicht liegt das ursprüngliche Kolbenmaterial vor, z. B. ein Eisenwerkstoff, Stahl etc.. Analog zur Ausführung aus einem Eisenwerkstoff kann der Kolben selbstverständlich auch aus einem anderen insbesondere metallischen Material bestehen.

Eine besonders gleichmäßige sowie glatte Kolbenoberfläche wird dadurch erreicht, daß die Verbindungsschicht vor der Oxidation Kapillaren bzw. röhrenartige Vertiefungen aufweist, die während der Oxidation durch Ausbildung der Oxidschicht an der Kolbenoberfläche jeweils verschlossen werden. Durch die Kapillaren bzw. Vertiefungen wird grundsätzlich eine Vielzahl von Oxidkeimen geschaffen, was die Entstehung einer homogenen Oxidschicht verstärkt und damit der Korrosionsschutz verbessert. Gleichzeitig werden die einzelnen Kapillaren bzw. Vertiefungen bei der Oxidation von der Oxidschicht ausgefüllt und somit an der Kolbenoberfläche durch Oxidpartikel bzw. Bestandteile der Oxidschicht verschlossen, so daß sich eine glatte Oberfläche ergibt.

Als Herstellverfahren zur Oberflächenbehandlung eines genannten hydraulischen Bremskolbens wird ein mehrstufiges Verfahren vorgeschlagen, daß für den Kolben ein Nitrokarburieren mit nachgeschalteter Oxidation sowie eine sich anschließende mechanische Bearbeitung der oxidierten Oberfläche vorsieht. Das Nitrokarburieren in der Gasphase, d. h. in einem gasförmigen Umgebungsmedium, dient der Diffusion von Stickstoff und Kohlenstoff C in das Kolbenmaterial, um die gewünschte Oberflächenbeschaffenheit vor allem hinsichtlich Verschleißfestigkeit sowie Korrosionsbeständigkeit einzustellen. Dabei werden die Außenabmessungen des Kolbens durch die thermochemische Behandlung weitestgehend nicht bzw. nur sehr geringfügig beeinflusst. Die Temperatur ist während des mehrstufigen Nitrokarburierprozesses auf maximal 530°C begrenzt. Dadurch läßt sich eine Maßänderung des Kolbens durch Verzug infolge von starker Wärmebeanspruchung verhindern. Außerdem wird der bei hohen Wärmebehandlungstemperaturen auftretende große Verlust an Kaltverfestigung im Kolben reduziert. Bei geringeren Prozesstemperaturen kann somit die Festigkeit des Kolbens insgesamt gesteigert werden.

Beim Nitrokarburieren durchläuft der Kolben einen thermischen Zyklus mit einer Aufheiz-, einer Halte- und einer Abkühlphase. Dieser thermische Zyklus wird unter Verwendung eines Stickstoff abgebenden Gasmediums, vorzugsweise Ammoniak NH₃, sowie eines Kohlenstoff C abgebenden Gasmediums, insbesondere Kohlendioxid CO₂, Endogas, Exogas, Methanol etc., durchlaufen. Weiterhin können dem gasförmigen Umgebungsmedium auch Additive wie beispielsweise Stickstoff N₂ oder Wasserstoff H₂ beigemischt werden, um die thermochemische Reaktion an der Kolbenoberfläche zu verstärken.

Zur weiteren Verbesserung der thermochemischen Oberflächenbehandlung erfolgt das Nitrokarburieren des hydraulischen Kolbens in mehreren Stufen mit einer ersten Stufe, bei der der Kolben einem ersten gasförmigen Medium umfassend Ammoniak NH₃, Kohlendioxid CO₂ und Stickstoff ausgesetzt ist und einer zweiten Nitrokarburierstufe, bei der der Kolben einem zweiten gasförmigen Mediums umfassend Ammoniak NH₃ und Kohlendioxid CO₂ ausgesetzt ist. Ziel des Nitrokarburierens ist es, durch Diffusion von Stickstoff und Kohlenstoff C die Kolbenoberfläche hinsichtlich Verschleiß und Dauerfestigkeit positiv zu beeinflussen. Dazu wird an der Kolbenoberfläche allseitig eine Nitrokarburierschicht erzeugt, die aus einer Verbindungsschicht an der Oberfläche und einer darunterliegenden Diffusionsschicht besteht. Dabei besitzen Verbindungs- und Diffusionsschicht die bereits oben genannten Eigenschaften. Die Mindestdicke der Verbindungsschicht von 8µm wird durch definierte Haltezeiten der Prozesstemperaturstufen eingestellt. Es ist weiterhin sinnvoll die Prozessparameter des Nitrokarburierens wie z. B. Temperaturverlauf, Gasdurchfluß und Gasvolumen durch Mikroprozessoren zu steuern.

Gemäß einer Weiterentwicklung des Verfahrens zur Oberflächenbehandlung wird für den Kolben vor der Nachoxidation ein von Ammoniak NH₃ befreites Umgebungsmedium eingestellt, um die Ergebnisse während der Oxidation zu verbessern. Dabei ist es erforderlich vor der Nachoxidation eine möglichst große Kolbenoberfläche auszubilden, um viele Oxidkeime bereitzustellen. Dies geschieht beispielsweise durch Einstellung einer bestimmten Kolbentemperatur bzw. einer Steuerung der Abkühlgeschwindigkeit oder der Gaszusammensetzung nach dem Nitrokarburieren. Ferner kann auch eine Durchführung eines Plasmaschrittes (Sputtern) zwischen dem Nitrokarburieren und der Nachoxidation erfolgen. Diese Maßnahmen ergeben eine vergrößerte Kolbenoberfläche z. B. durch Ausbildung der bereits genannten Kapillaren bzw. sehr kleiner röhrenartiger Vertiefungen. Somit wird die Entstehung der Oxidschicht erleichtert, was letztlich in einer feineren die Struktur der Oxidschicht resultiert und damit eine bessere Korrosionsbeständigkeit sichert. Zur Einstellung eines von Ammoniak NH₃ befreiten Umgebungsmediums kann der mit den Kolben versehene Chargenraum mit Stickstoff N₂ bzw. einem anderen inerten Gas gespült werden, bei gleichzeitiger Temperaturabsenkung auf unter 480°C. Alternativ dazu bietet sich eine Evakuierung des Chargenraumes mit anschließender Flutung mit Stickstoff N₂ an.

Die eigentliche Oxidation erfolgt in einem Sauerstoff abgebenden Medium, vorzugsweise Luft oder Wasserdampf. Durch geeignete Steuerung der Oxidationszeit kann die gewünschte Dicke der Oxidschicht von mehr als 1µm eingestellt werden. Als in der Praxis günstig hat sich eine Oxidationsschichtdicke von etwa 2µm erwiesen.

Zur weiteren Verbesserung des Korrosionsschutzes sowie der Oberflächenbeschaffenheit ist es sinnvoll, die Kolbenoberfläche nach der Oxidation einer mechanischen Bearbeitung zu unterziehen. Durch diese Maßnahme werden in der Oxidschicht vorhandene Unebenheiten geglättet. Dies ergibt eine gleichmäßig glatte Kolbenoberfläche, die insbesondere einen geringen Reibungswiderstand aufweist. Die mechanische Bearbeitung der Oxidschicht kann insbesondere mittels eines Poliervorgangs erzielt werden. Hierbei bieten sich als Bearbeitungsverfahren z. B. Bürsten, Finishen, Pastenpolieren oder Läppen an. Eine Bürstbearbeitung ist besonders vorteilhaft, da insgesamt nur ein geringer Materialabtrag an der Oxidschicht erfolgt, so daß nach der Bearbeitung eine durchgehende Oxidschicht ohne Unterbrechung mit einer Mindestdicke von 1µm verbleibt.

Grundsätzlich ist das beschriebene Verfahren zur Oberflächenbehandlung nicht nur auf Bremskolben sondern auch auf jeden anderen hydraulischen Kolben anzuwenden, z. B. Bremsbetätigungszylinderkolben.

## Patentansprüche

1. Hydraulischer Bremskolben für eine Kraftfahrzeugbremse, mit einer thermochemisch behandelten Oberfläche, **gekennzeichnet durch** mehrere übereinanderliegende Schichten an der Kolbenoberfläche mit:
- einer unmittelbar an der Kolbenoberfläche angeordneten Oxidschicht, die eine Dicke von mehr als 1µm aufweist,
- einer unter der Oxidschicht angeordneten Verbindungsschicht, die vornehmlich aus Nitriden besteht,
- einer unter der Verbindungsschicht angeordneten Diffusionsschicht, die Stickstoff in gelöster Form bzw. ausgeschiedene Nitride aufweist,
wobei die Verbindungsschicht eine Mindestdicke von 8µm aufweist, und wobei der Bremskolben kaltverfestigt ist.

2. Hydraulischer Bremskolben nach Anspruch 1, **dadurch gekennzeichnet, daß** die Verbindungsschicht Kapillaren aufweist, die jeweils durch Anteile der Oxidschicht an der Kolbenoberfläche verschlossen sind.

3. Verfahren zur Oberflächenbehandlung eines hydraulischen Bremskolbens, **gekennzeichnet durch** den folgenden Verfahrensablauf:
- Nitrokarburieren des Kolbens in einem gasförmigen Medium;
- Nachoxidation des Kolbens in einem Sauerstoff O₂ abgebenden Medium;
- mechanische Bearbeitung der oxidierten Oberfläche zur Einstellung der Oberflächengüte, wobei das Nitrokarburieren des Kolbens in mehreren Stufen erfolgt mit:
- einer ersten Stufe, bei der der Kolben einem ersten gasförmigen Medium umfassend Ammoniak NH₃, Kohlendioxid CO₂ und Stickstoff ausgesetzt ist,
- einer zweiten Nitrokarburierstufe, bei der der Kolben einem zweiten gasförmigen Medium umfassend Ammoniak NH₃ und Kohlendioxid CO₂ ausgesetzt ist, und wobei die Temperatur während des Nitrokarburierprozesses maximal 530°C beträgt.

4. Verfahren zur Oberflächenbehandlung eines hydraulischen Bremskolbens nach Anspruch 3, **dadurch gekennzeichnet, daß** für den Kolben vor der Nachoxidation ein von Ammoniak NH₃ befreites Umgebungsmedium eingestellt wird.

5. Verfahren zur Oberflächenbehandlung eines hydraulischen Bremskolbens nach einem der Ansprüche 3-4, **dadurch gekennzeichnet, daß** die mechanische Bearbeitung durch einen Polier- oder Bürstvorgang erfolgt.

## Claims

1. Hydraulic brake piston for a motor vehicle brake, having a thermochemically treated surface, **characterized by** multiple layers, situated one above the other, on the piston surface, having:
- an oxide layer which is arranged directly on the piston surface and which has a thickness of greater than 1 µm,
- a connecting layer which is arranged under the oxide layer and which is composed predominantly of nitrides,
- a diffusion layer which is arranged under the connecting layer and which has nitrogen in dissolved form or precipitated nitrides,
wherein the connecting layer has a minimum thickness of 8 µm, and wherein the brake piston is work-hardened.

2. Hydraulic brake piston according to Claim 1, **characterized in that** the connecting layer has capillaries which are each closed off by components of the oxide layer on the piston surface.

3. Method for the surface treatment of a hydraulic brake piston, **characterized by** the following method sequence:
- nitrocarburization of the piston in a gaseous medium;
- post-oxidation of the piston in a medium which releases oxygen O₂;
- mechanical machining of the oxidized surface in order to generate the surface quality, wherein the nitrocarburization of the piston is performed in multiple steps with:
- a first step in which the piston is exposed to a first gaseous medium comprising ammonia NH₃, carbon dioxide CO₂ and nitrogen,
- a second nitrocarburization step in which the piston is exposed to a second gaseous medium comprising ammonia NH₃ and carbon dioxide CO₂, and wherein the temperature during the nitrocarburizing process amounts to at most 530°C.

4. Method for the surface treatment of a hydraulic brake piston according to Claim 3, **characterized in that**, before the post-oxidation, a surrounding medium free from ammonia NH₃ is generated for the piston.

5. Method for the surface treatment of a hydraulic brake piston according to either of Claims 3 and 4, **characterized in that** the mechanical machining is performed by means of a polishing or brushing process.

## Revendications

1. Piston de frein hydraulique, destiné à un frein de véhicule automobile, comprenant une surface traitée par voie thermochimique, **caractérisé par** plusieurs couches superposées sur la surface du piston qui comprennent :
- une couche d'oxyde disposée directement sur la surface de piston et ayant une épaisseur supérieure à 1 µm,
- une couche de liaison disposée au-dessous de la couche d'oxyde et comprenant principalement des nitrures,
- une couche de diffusion disposée sous la couche de liaison et comprenant de l'azote sous forme dissoute ou des nitrures précipités,
la couche de liaison ayant une épaisseur minimale de 8 µm et le piston de frein étant écroui.

2. Piston de frein hydraulique selon la revendication 1, **caractérisé en ce que** la couche de liaison comporte des capillaires qui sont chacun fermés par des portions de la couche d'oxyde à la surface de piston.

3. Procédé de traitement de surface d'un piston de frein hydraulique, **caractérisé par** les étapes suivantes :
- nitrocarburation du piston en milieu gazeux ;
- post-oxydation du piston dans un milieu à dégagement d'oxygène O₂ ;
- traitement mécanique de la surface oxydée pour ajuster la qualité de surface, la nitrocarburation du piston se faisant en plusieurs étapes dont :
- une première étape dans laquelle le piston est exposé à un premier milieu gazeux comprenant de l'ammoniac NH₃, du dioxyde de carbone CO₂ et de l'azote,
- une deuxième étape de nitrocarburation dans laquelle le piston est exposé à un deuxième milieu gazeux comprenant de l'ammoniac NH₃ et du dioxyde de carbone CO₂, et la température au cours du processus de nitrocarburation étant au maximum de 530 °C.

4. Procédé de traitement de surface d'un piston de frein hydraulique selon la revendication 3, **caractérisé en ce qu'**un milieu ambiant exempt d'ammoniac NH₃ est ajusté pour le piston avant la post-oxydation.

5. Procédé de traitement de surface d'un piston de frein hydraulique selon l'une des revendications 3 et 4, **caractérisé en ce que** le traitement mécanique est effectué par une opération de polissage ou de brossage.
